# EUROPEAN PATENT SPECIFICATION

(11) **EP 3 903 908 B1**
(45) Date of publication and mention of the grant of the patent: **19.11.2025**
(21) Application number: 19902996.8
(22) Date of filing: 27.12.2019
(51) Int. Cl.: B01D 46/42, B60T 17/00, B01D 53/26

(54) **AIR SUPPLY SYSTEM**
LUFTZUFUHRSYSTEM
SYSTÈME D'ALIMENTATION EN AIR

(30) Priority: 28.12.2018 JP 2018246456
(43) Date of publication of application: 03.11.2021
(73) Proprietor: Nabtesco Automotive Corporation, Tokyo 102-0093 (JP)
(72) Inventor: SUGIO, Takuya, Tokyo 102-0093 (JP)
(74) Representative: Grünecker Patent- und Rechtsanwälte PartG mbB
(86) International application number: PCT/JP2019/051358
(87) International publication number: WO 2020/138392

(56) References cited:
- EP-B1- 1 529 704
- WO-A1-2010/095754
- WO-A1-2018/105711
- WO-A1-2019/235583
- JP-A- 2003 276 591
- JP-A- 2004 124 711
- JP-A- 2004 537 469
- JP-A- 2015 229 127
- JP-A- H05 505 759
- JP-A- H08 159 041
- US-A- 5 027 529
- US-A1- 2011 052 419

## Description

The present invention relates to an air supply system that supplies compressed air to a device.

Vehicles such as trucks, buses, and construction machines use compressed air delivered from a compressor to control pneumatic systems such as brakes and suspensions. The compressed air contains liquid impurities such as water, which is contained in the atmosphere, and oil for lubricating the interior of the compressor. When entering inside a pneumatic system, compressed air containing a large amount of water and oil causes rust and swelling of rubber members. This results in an operational defect. For this reason, an air dryer is provided downstream of the compressor to remove impurities such as water and oil from the compressed air.

The air dryer performs a dehumidifying operation to remove oil and water from the compressed air, and a regenerating operation to remove oil and water absorbed by the desiccant and to discharge oil and water to the outside as collected liquid. For example, Patent Document 1 discloses a technique by which an air dryer performs the regenerating operation.

The air supply system disclosed in Patent Document 1 stores air compressed by an air compressor in an air tank. When the air pressure in the air tank is less than or equal to a first pressure, the air supply system drives the air compressor to supply compressed air to the air tank until the air pressure increases and reaches a second pressure. When the air pressure reaches the second pressure, the air supply system stops the supply of compressed air to the air tank by the air compressor, and opens a discharge valve (purge valve). Thereafter, the air supply system maintains the discharge valve in the opened state until the air pressure decreases to a third pressure, thereby performing the regenerating operation, in which the compressed air in the air tank is caused to flow through the air dryer and is discharged to the atmosphere. The air supply system closes the discharge valve when the air pressure in the air tank reaches the third pressure.

Patent Document 1: Japanese Laid-Open Patent Publication No. 2015-229127
From US 5,027,529 A a compressed air system for operating mechanical devices is known. The compressed air system includes an air compressor which charges compressed air to a storage reservoir. Before the compressed air is charged to the reservoir, it passes an air dryer. A small quantitiy of compressed air is used to regenerate the air dryer when the compressor is disabled. The compressor will be back in the enabled condition when the pressure drops below a predecided pressure level. If however the regeneration or purging of the air dryer is not yet completed the compressor is maintained in the disabled condition.
Air supply systems storing compressed air and being provided with a compressor and an air dryer are known from JP 2015-229127 A, US 2011/0052419 A1, EP 1 529 704 B1 and WO 2018/105711 A1.

In a traveling state that consumes a large amount of compressed air, if a sudden consumption of compressed air, for example, by the brakes, and a consumption of compressed air by a regenerating operation of an air dryer occur simultaneously, the air pressure in the air tank may reach a supply start value, at which the supply of compressed air from the compressor starts. At this time, the regenerating operation of the air dryer is interrupted, and the compressor starts the supplying operation in the air supply system. Although this avoids a shortage of compressed air, the interruption of the regenerating operation results in a reduced extent of the regeneration of the air dryer. Accordingly, the performance of the air dryer may remain reduced.

Accordingly, it is an objective of the present invention to provide an air supply system that is capable of limiting reduction in the performance of an air dryer.

This is achieved by an air supply system according to claim 1.

Even if the time of consumption of compressed air by the brakes and the like and the time of consumption of compressed air by the regenerating operation of the air dryer overlap, the above-described configuration allows the consumption of the compressed air by the brakes and the like to continue, while allowing the regenerating operation of the air dryer to continue without interruption. This limits reduction in the performance of the air dryer.

According to one embodiment, the predetermined pressure value may be set such that an amount of time required for the regenerating operation is ensured.

This configuration allows the regenerating operation of the air dryer to be performed without fail.

### BRIEF DESCRIPTION OF THE DRAWINGS

Fig. 1 is a block diagram schematically showing the configuration of an air supply system according to an embodiment used in a pneumatic system.
Fig. 2 is a diagram schematically showing the air supply system of the embodiment.
Fig. 3A is a diagram showing an operational mode of the air dryer of the embodiment, illustrating a supplying operation.
Fig. 3B is a diagram showing an operational mode of the air dryer of the embodiment, illustrating a purging operation.
Fig. 3C is a diagram showing an operational mode of the air dryer of the embodiment, illustrating a regenerating operation.
Fig. 4 is a graph showing an air supplying state of the embodiment in terms of air pressure.

### MODES FOR CARRYING OUT THE INVENTION

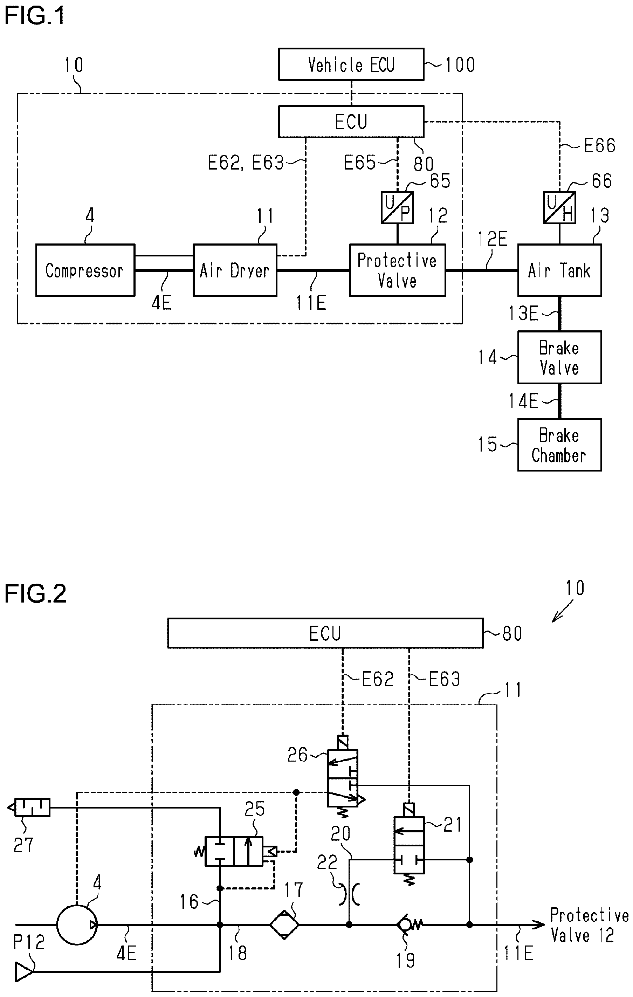

An air supply system according to an embodiment in a pneumatic system will be described with reference to Figs. 1 to 4. The air supply system is mounted on an automobile such as a truck, a bus, or a construction machine.

With reference to Fig. 1, a schematic configuration of the pneumatic system will be described.

The pneumatic system includes a compressor 4, an air dryer 11, a protective valve 12, an air tank 13, a brake valve 14, and a brake chamber 15, which are connected sequentially by air supply paths 4E, 11E, 12E, 13E, and 14E. Among these components, the compressor 4, the air dryer 11, and the protective valve 12 are included in an air supply system 10.

The compressor 4 is driven by a force of the engine (not shown) of the automobile to compress air and supply compressed air to the air supply system 10. The compressor 4 is connected to the air dryer 11 via the air supply path 4E.

In the air dryer 11, the compressed air delivered from the compressor 4 passes through a filter 17 (refer to Fig. 2), so that impurities in the air are trapped, so that the compressed air is cleaned. The thus cleaned compressed air is supplied to the air tank 13 from the air dryer 11 via the air supply path 11E, the protective valve 12 and the air supply path 12E.

The air tank 13 is connected to the brake valve 14, which is operated by a driver, via the air supply path 13E. The brake valve 14 is connected to the brake chamber 15 via the air supply path 14E. Thus, in response to the operation of the brake valve 14, compressed air is supplied to the brake chamber 15, so that a service brake is activated.

The air supply system 10 includes an ECU 80, which serves as a controller. The ECU 80 is electrically connected to the air dryer 11 via wires E62, E63. Also, the ECU 80 is electrically connected to a pressure sensor 65 via a wire E65. The pressure sensor 65 detects air pressure in the protective valve 12 and outputs a detection signal to the ECU 80. The ECU 80 obtains a detected air pressure, which corresponds to the air pressure of the air tank 13, from the detection signal of the pressure sensor 65. Also, the ECU 80 is electrically connected to a temperature-humidity sensor 66 via a wire E66. The temperature-humidity sensor 66 detects the humidity of the compressed air in the air tank 13 and outputs it to the ECU 80. Further, the ECU 80 is electrically connected to a vehicle ECU 100 so as to acquire various signals in the vehicle on which the air supply system 10 is mounted.

The ECU 80 includes a computation unit, a volatile storage unit, and a non-volatile storage unit (none of which is shown), and delivers signals specifying actions to the air dryer 11 in accordance with programs stored in the non-volatile storage unit. The ECU 80 includes a timer used to measure periods related to a regenerating operation.

The air supply system 10 will be described with reference to Fig. 2.

The air dryer 11 includes a maintenance port P12. The maintenance port P12 is used to supply compressed air to a section upstream of the filter 17 of the air dryer 11 during maintenance.

The ECU 80 is electrically connected to a regeneration control valve 21 of the air dryer 11 via the wire E63, and is electrically connected to a governor 26 of the air dryer 11 via the wire E62.

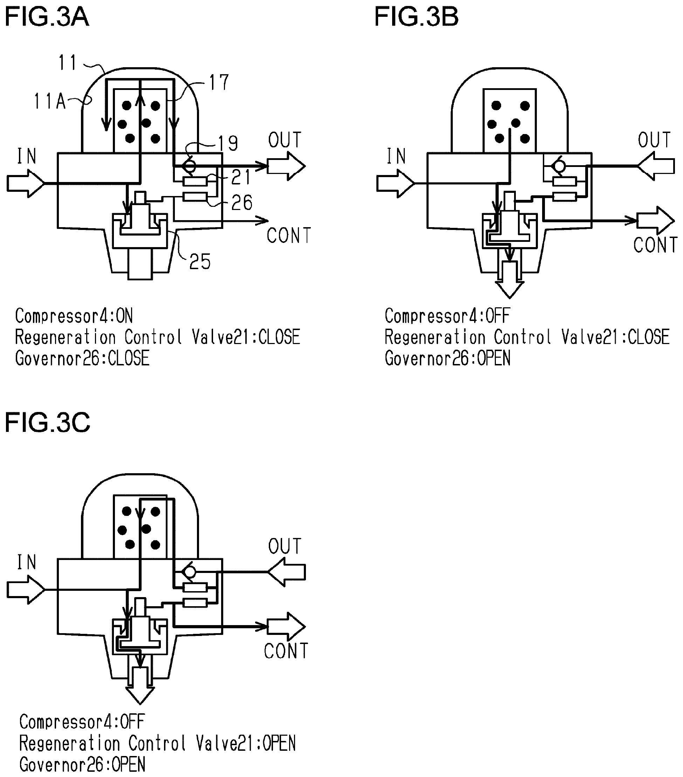

With reference to Figs. 3A to 3C, the air dryer 11 includes the filter 17 in an internal space 11A. The filter 17 is disposed in an air supply passage 18. The air supply passage 18 connects the air supply path 4E, which extends from the compressor 4 on the upstream side, to the air supply path 11E, which is connected to the protective valve 12 on the downstream side.

The filter 17 accommodates a desiccant and includes a filtering unit. The filter 17 causes compressed air to pass through the desiccant so as to remove water contained in the compressed air, thereby drying the compressed air, and removes oil contained in the compressed air using the filtering unit so as to clean the compressed air. The compressed air that has passed through the filter 17 is supplied to the protective valve 12 via a check valve 19, which permits the compressed air from the filter 17 to flow only to the downstream side. Assuming that the filter 17 is disposed on the upstream side, and the protective valve 12 is disposed on the downstream side, the check valve 19 permits compressed air to flow only from the upstream side to the downstream side.

Referring to Fig. 2, a bypass passage 20, which bypasses the check valve 19, is disposed to be parallel with the check valve 19. The regeneration control valve 21 is connected to the bypass passage 20.

The regeneration control valve 21 is an electromagnetic valve controlled by the ECU 80. The ECU 80 controls energization/de-energization (activation/deactivation) of the regeneration control valve 21 via the wire E63, thereby switching the operation of the regeneration control valve 21. In a de-energized state, the regeneration control valve 21 is closed to block the bypass passage 20. In an energized state, the regeneration control valve 21 is open to open the bypass passage 20. For example, the regeneration control valve 21 is activated when the value of the detected air pressure exceeds a supply stop value.

The bypass passage 20 includes an orifice 22 between the regeneration control valve 21 and the filter 17. When the regeneration control valve 21 is energized, the compressed air in the air tank 13 is delivered to the filter 17 through the protective valve 12 and via the bypass passage 20 with the flow rate being regulated by the orifice 22. The compressed air delivered to the filter 17 flows backward from the downstream side to the upstream side through the filter 17. This process is designed to regenerate the filter 17 and is referred to as a regeneration process of an air dryer. At this time, the compressed air in the air tank 13, which has been dried and cleaned, flows backward through the filter 17, thereby removing trapped water and oil from the filter 17. For example, the regeneration control valve 21 is controlled to be open for a predetermined amount of time. The predetermined amount of time is an amount of time that allows the filter 17 to be regenerated, and is set logically, experimentally, or empirically.

A branch passage 16 branches off a section between the compressor 4 and the filter 17. A drain valve 25 is disposed on the branch passage 16, and a drain port 27 is connected to the end of the branch passage 16.

Collected liquid, which contains water and oil removed from the filter 17, is delivered to the drain valve 25 together with compressed air. The drain valve 25 is a pneumatic valve driven by air pressure and is disposed in a section of the branch passage 16 between the filter 17 and the drain port 27. The drain valve 25 is a two-port two-position valve, which changes the position between a closed position and an open position. The drain valve 25 delivers collected liquid to the drain port 27 when in the open position. The collected liquid discharged from the drain port 27 may be recovered by an oil separator (not shown).

The drain valve 25 is controlled by the governor 26. The governor 26 is an electromagnetic valve controlled by the ECU 80. The ECU 80 controls energization/deenergization (activation/deactivation) of the governor 26 via the wire E62, thereby switching the operation of the governor 26. When energized, the governor 26 delivers an unload signal of a predetermined air pressure to the drain valve 25, thereby opening the drain valve 25. When de-energized, the governor 26 does not deliver the unload signal to the drain valve 25, thereby exposing the port of the drain valve 25 to the atmospheric pressure, thereby closing the drain valve 25.

The drain valve 25 is maintained in the closed position when receiving no unload signal from the governor 26. The drain valve 25 is switched to the open position when receiving the unload signal from the governor 26. Further, when the pressure at the input port of the drain valve 25, which is connected to the compressor 4, is increased beyond an upper limit, the drain valve 25 is forcibly switched to the open position.

The compressor 4 performs a load operation to supply compressed air and a no-load operation to supply no compressed air. The governor 26 controls switching between the load operation and the no-load operation of the compressor 4. When energized, the governor 26 delivers an unload signal to the compressor 4 so as to cause the compressor 4 to perform the no-load operation. When de-energized, the governor 26 does not deliver the unload signal to the compressor 4 and exposes the port of the compressor 4 to the atmosphere, so as to cause the compressor 4 to perform the load operation.

The ECU 80 energizes (activates) the governor 26 based on the detected air pressure of the pressure sensor 65, thereby switching the governor 26 to a supply position, at which the unload signal is output. Also, the ECU 80 de-energizes (deactivates) the governor 26 based on the detected air pressure of the pressure sensor 65, thereby switching the governor 26 to a non-supply position, at which the governor 26 does not output the unload signal.

Referring to Figs. 3A to 3C, a supplying operation, a purging operation, and a regenerating operation of the air dryer 11 will be described. The supplying operation shown in Fig. 3A is an operation that supplies compressed air to the air tank 13. The purging operation shown in Fig. 3B is an operation in which the compressor is put in a stopped state in order to execute a purging process and the like. The regenerating operation shown in Fig. 3C is an operation that performs a regeneration process of the filter 17. The regenerating operation and the purging operation are included in the non-supplying operation.

With reference to Fig. 3A, during the supplying operation, the ECU 80 closes the regeneration control valve 21 and the governor 26 (indicated by CLOSE in the drawing). At this time, the regeneration control valve 21 and the governor 26 do not receive drive signals (power) from the ECU 80. Thus, the governor 26 exposes the ports of the compressor 4 and the drain valve 25, which are located downstream of and connected to the governor 26, to the atmosphere. In the supplying operation, the compressor 4 supplies compressed air (indicated by ON in the drawing). The compressed air supplied to the air dryer 11 (indicated by IN in the drawing) is supplied to the air tank 13 (indicated by OUT in the drawing) via the protective valve 12 after the filter 17 removes water and oil from the compressed air.

With reference to Fig. 3B, during the purging operation, the ECU 80 closes the regeneration control valve 21 and opens the governor 26 (indicated by OPEN in the drawing). At this time, the governor 26 receives a drive signal (power) from the ECU 80 and opens, thereby connecting the ports of the compressor 4 and the drain valve 25, which are located downstream of and connected to the governor 26, to the upstream side (the protective valve 12). In the purging operation, the unload signal from the governor 26 (indicated by CONT in the drawing) puts the compressor 4 in the no-load operation state (indicated by OFF in the drawing). Also, the compressed air in the filter 17 and the air supply passage 18 is discharged from the drain port 27 together with water and oil.

With reference to Fig. 3C, during the regenerating operation, the ECU 80 opens the regeneration control valve 21 and the governor 26. At this time, the regeneration control valve 21 and the governor 26 receive a drive signal (power) from the ECU 80. In the regenerating operation, the unload signal from the governor 26 puts the compressor 4 in the no-load operation state. In the regenerating operation, the regeneration control valve 21 and the drain valve 25 are opened, so that the compressed air in a section on the side of the filter 17 that corresponds to the protective valve 12 flows backward from the downstream side to the upstream side through the filter 17 (the accommodated desiccant). Accordingly, the regeneration process of the filter 17 is performed.

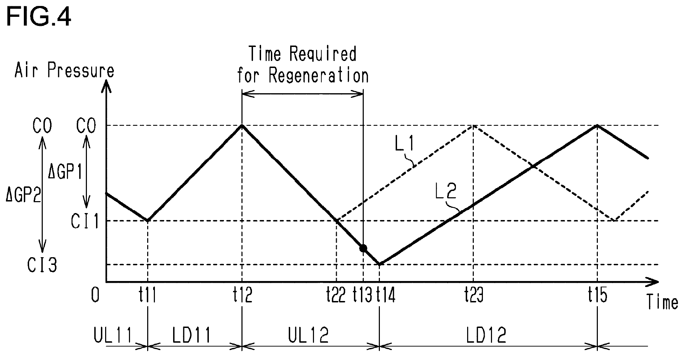

An operation of the air supply system 10 will now be described with reference to Fig. 4.

The ECU 80 stores a supply start value CI1 and a supply stop value CO. The supply start value CI1 corresponds to an air pressure that is the necessary condition for starting the supply of compressed air by the compressor 4. The supply stop value CO corresponds to an air pressure at which the supply of compressed air by the compressor 4 is stopped. Also, the ECU 80 stores a non-supply canceling value CI3, which is a predetermined pressure value less than the supply start value CI1. For example, the supply stop value CO, the supply start value CI1, and the non-supply canceling value CI3 may be stored in the non-volatile storage unit of the ECU 80.

The ECU 80 compares the detected air pressure, which has been detected by the pressure sensor 65, with the supply start value CI1. When the detected air pressure becomes less than or equal to the supply start value CI1 (a point in time t11, at which a period UL11 ends), the ECU 80 switches the air dryer 11 (compressor 4) to the supplying operation so as to supply compressed air to the air tank 13. This closes the governor 26 of the air dryer 11 and thus stops output of the unload signal. The compressor 4 performs the load operation in response to the stopping of the unload signal. As the supplying operation of the air dryer 11 (compressor 4) continues, the detected air pressure at the air tank 13 increases (in a period LD11 from the point in time t11 to a point in time t12).

When the detected air pressure becomes greater than or equal to the supply stop value CO (the point in time t12) due to the supply of compressed air, the ECU 80 switches the air dryer 11 to the regenerating operation. This opens the governor 26 of the air dryer 11, so that the unload signal is output. The compressor 4 performs the no-load operation in response to the input of the unload signal. Also, in the air dryer 11, the governor 26 outputs the unload signal to the drain valve 25. The drain valve 25 is opened in response to the input of the unload signal, so that the compressed air in the filter 17 of the air dryer 11 is caused to flow in a regeneration direction. The regeneration direction refers to a direction from the downstream side to the upstream side and is opposite to a supplying direction, which is the direction of the flow of compressed air when the compressed air is cleaned. As a result, impurities trapped by the filter 17 are discharged as collected liquid from the drain valve 25 together with the compressed air flowing in the regeneration direction, so that the filter 17 is regenerated (from the point in time t12 to a point in time t13). The period from the point in time t12 to the point in time t13 corresponds to a period required to regenerate the filter 17. If the amount of the compressed air consumed by the brake chamber 15 and the like is normal, the period ends before the detected air pressure becomes less than or equal to the supply start value CI1.

Normally, in response to the detected air pressure being less than or equal to the supply start value CI1, which is the necessary condition for starting the supplying operation (a point in time t22), the ECU 80 starts the supplying operation as indicated by the broken line L1 (from the point in time t22 to a point in time t23).

However, the detected air pressure may become less than or equal to the supply start value CI1 (the point in time t22) during the regenerating operation before the elapse of the amount of time required for regeneration of the filter 17 if the time of consumption of a large amount of compressed air by the brake chamber 15 and the like and the time of consumption of compressed air by the regenerating operation of the air dryer 11 overlap. At this time, if the ECU 80 starts the supplying operation in response to the detected air pressure being less than or equal to the supply start value CI1 as in a normal operation, the regeneration of the filter 17 would be interrupted, or the regeneration performance would be reduced. For example, if the regenerating operation of the air dryer 11 is, for example, interrupted (the point in time t22) before the amount of time required for regeneration (from the point in time t12 to the point in time t13) has elapsed, the extent of regeneration will be insufficient relative to the extent that would be achieved normally by the extent corresponding to the amount of time lost due to the interruption (from the point in time t22 to the point in time t13). The insufficiency of the extent of regeneration of the filter 17 due to the interruption of the regenerating operation of the air dryer 11 may cause the air cleaning performance of the air dryer 11 to remain reduced.

In this regard, the ECU 80 of the present embodiment does not start the supplying operation but continues the regenerating operation of the air dryer 11 (after the point in time t22) even if the detected air pressure becomes less than or equal to the supply start value CI1 (the point in time t22) during the regenerating operation of the air dryer 11 as indicated by the solid line L2. Further, the ECU 80 starts the supplying operation in response to the detected air pressure reaching the non-supply canceling value CI3, at which the supplied amount of compressed air is sufficient. That is, an air pressure difference ΔGP2 from the supply stop value CO to the non-supply canceling value CI3 is ensured to be greater than an air pressure difference ΔGP1 from the normal supply start value CI1 to the supply stop value CO. This ensures an amount of time UL12 (from the point in time t12 to the point in time t14), which is longer than the amount of time required for regeneration. That is, the non-supply canceling value CI3 is set such that the amount of time required for the regenerating operation of the air dryer 11 is ensured even when a large amount of compressed air is consumed. This allows the consumption of the compressed air by the brake chamber 15 to continue, while allowing the regenerating operation of the air dryer 11 to continue. Accordingly, the performance of the air dryer 11 is prevented from remaining reduced.

The ECU 80 switches the air dryer 11 (compressor 4) to the supplying operation to supply compressed air to the air tank 13 in response to the detected air pressure being less than or equal to the non-supply canceling value CI3 (the point in time t14). The detected air pressure being less than or equal to the non-supply canceling value CI3 is included in a non-supply canceling condition. This starts the load operation of the compressor 4, so that the continuation of the supplying operation of the air dryer 11 (compressor 4) increases the detected air pressure of the air tank 13 (in a period LD12 from the point in time t14 to a point in time t15).

Even if the regenerating operation of the air dryer 11 is being performed, the ECU 80 interrupts the regenerating operation of the air dryer 11 when the detected air pressure reaches the non-supply canceling value CI3. This allows the consumption of compressed air by the brake chamber 15 to continue, while extending the duration of the regenerating operation of the air dryer 11. Accordingly, the performance of the air dryer 11 is prevented from remaining reduced.

As described above, the present embodiment has the following advantages.
(1) Even if the time of consumption of compressed air by the brakes and the like and the time of consumption of compressed air by the regenerating operation of the air dryer 11 overlap, the above-described embodiment allows the consumption of the compressed air by the brakes and the like to continue, while allowing the regenerating operation of the air dryer 11 to continue without interruption. This limits reduction in the performance of the air dryer.
(2) The supplying operation by the compressor 4 is started in response to the detected air pressure being less than or equal to a predetermined pressure value less than the normal supply start value. This prevents compressed air from being insufficient, while allowing the regenerating operation of the air dryer 11 to continue as long as possible.
(3) The non-supply canceling value CI3 is set to ensure the amount of time required for the regenerating operation of the air dryer 11. This allows the regenerating operation of the air dryer 11 to be performed without fail.

The above-described embodiment may be modified as follows. The above-described embodiment and the following modifications can be combined as long as the combined modifications remain technically consistent with each other.

The air tank 13 may supply compressed air to devices that consume compressed air other than the brake valve 14, for example, to a parking brake.

The pressure sensor 65 may detect the air pressure at any position that is downstream of the check valve 19 as long as the pressure sensor 65 can detect an air pressure that corresponds to the air pressure of the air tank 13. For example, the pressure sensor may detect the air pressure in the air tank 13. In this case, the ECU 80 may be capable of controlling the supplying operation, the non-supplying operation, and the regenerating operation based on the detected air pressure in the air tank 13.

The ECU 80 may determine that the current traveling state is a traveling state that consumes a large amount of compressed air based on a signal transmitted from the vehicle ECU 100, which is a controller for the vehicle. This allows a traveling state that consumes a large amount of compressed air to be determined based on a signal transmitted from the vehicle.

The ECU 80 may determine that the current traveling state is a traveling state that consumes a large amount of compressed air based on a large decrease in the detected air pressure per unit time. This allows the current traveling state to be determined based on the amount of decrease per unit time of the detected air pressure.

The non-supply continuation condition may include that the current traveling state is a traveling state that consumes a large amount of compressed air. In a traveling state that consumes a large amount of compressed air, it is highly likely that the amount of time required for the regeneration has not elapsed even if the air pressure reaches the supply start value CI1. Therefore, it is possible to design the configuration in advance such that the regenerating operation of the air dryer 11 can be performed until the non-supply continuation condition is satisfied and the air pressure reaches the non-supply canceling value CI3. This reduces the possibility that the regenerating operation of the air dryer 11 will be interrupted in a traveling state that consumes a large amount of compressed air.

In the above-described embodiment, the filter 17 includes both the desiccant and the filtering unit. However, the filter 17 may include only one of these.

Although the above-described embodiment describes a case in which the filter 17 is provided, an oil mist separator may be provided on the upstream side of the filter 17. The oil mist separator includes a filter that performs gas/liquid separation through collision with compressed air, thereby trapping oil contained in the compressed air delivered from the compressor 4. The filter may be formed by stamping metal. Alternatively, the filter may be made of porous material such as sponge. The oil mist separator further improves the cleaning performance for compressed air.

In the above-described embodiment, the air supply system 10 is described as a system employed in an automobile such as a truck, a bus, or a construction machine. Alternatively, the air supply system may be mounted on other vehicles such as passenger cars, railway vehicles, or the like.

### DESCRIPTION OF THE REFERENCE NUMERALS

4...Compressor; 10...Air Supply System; 11... Air Dryer; 11A...Internal Space; 12...Protective Valve; 13...Air Tank; 14...Brake Valve; 4E, 11E, 12E, 13E, 14E... Air Supply Paths; 15...Brake Chamber; 16...Branch Passage; 17...Filter; 18...Air Supply Passage; 19...Check Valve; 20...Bypass Passage; 21...Regeneration Control Valve; 22...Orifice; 25...Drain Valve; 26...Governor; 27...Drain Port; 65...Pressure Sensor; 66... Temperature-Humidity Sensor; 80...ECU; 100...Vehicle ECU; E62, E63, E65, E66...Wires; P12...Maintenance Port

## Claims

1. An air supply system (10) that performs a supplying operation that causes compressed air supplied from a compressor (4) to flow from an upstream side to a downstream side via an air dryer (11) including a filter (17) and a check valve (19), the air supply system comprising:
a pressure sensor (65) that detects an air pressure on a downstream side of the check valve (19); and
a controller (80) that switches between the supplying operation and a non-supplying operation, and performs a regenerating operation, which regenerates the filter (17), during the non-supplying operation, wherein
the controller (80) stores a supply start value (CI1), the supplying operation being started when a necessary condition is satisfied, the necessary condition being that a detected air pressure detected by the pressure sensor (65) is less than or equal to the supply start value,
**characterized in that**
the controller (80) further stores a non-supply continuation condition, wherein, if the non-supply continuation condition is satisfied, the supplying operation is not performed during the regenerating operation even if the detected air pressure is less than or equal to the supply start value, wherein
the non-supply continuation condition includes that a current traveling state is a traveling state that consumes an amount of the compressed air, and
the controller (80) determines that the current traveling state is the traveling state that consumes an amount of the compressed air based on a decrease in the detected air pressure per unit time.

2. The air supply system according to claim 1, wherein
the controller (80) further stores a non-supply canceling condition, and
if the non-supply canceling condition is satisfied when the non-supply continuation condition is satisfied, the supplying operation is started in response to the detected air pressure being less than or equal to a predetermined pressure value (CI3) that is less than the supply start value.

3. The air supply system according to claim 2, wherein the predetermined pressure value is set such that an amount of time required for the regenerating operation is ensured.

## Patentansprüche

1. Luftversorgungssystem (10), das einen Versorgungsbetrieb durchführt, der bewirkt, dass von einem Kompressor (4) zugeführte Druckluft von einer Stromaufwärtsseite zu einer Stromabwärtsseite über einen Lufttrockner (11), umfassend ein Filter (17) und ein Rückschlagventil (19), strömt, wobei das Luftversorgungssystem umfasst:
einen Drucksensor (65), der einen Luftdruck auf einer Stromabwärtsseite des Rückschlagventils (19) erfasst; und
ein Steuergerät (80), das zwischen dem Versorgungsbetrieb und einem Nicht-Versorgungsbetrieb umschaltet und während des Nicht-Versorgungsbetriebs einen Regenerationsbetrieb durchführt, der das Filter (17) regeneriert, wobei
das Steuergerät (80) einen Versorgungsstartwert (CM) speichert, wobei der Versorgungsbetrieb gestartet wird, wenn eine notwendige Bedingung erfüllt ist, wobei die notwendige Bedingung darin besteht, dass ein vom Drucksensor (65) erfasster Luftdruck kleiner oder gleich dem Versorgungsstartwert ist,
**dadurch gekennzeichnet, dass**
das Steuergerät (80) ferner eine Nicht-Versorgungs-Fortsetzungsbedingung speichert, wobei, wenn die Nicht-Versorgungs-Fortsetzungsbedingung erfüllt ist, der Versorgungsbetrieb während des Regenerationsbetrieb nicht durchgeführt wird, selbst wenn der erfasste Luftdruck kleiner oder gleich dem Versorgungsstartwert ist, wobei
die Nicht-Versorgungs-Fortsetzungsbedingung umfasst, dass ein aktueller Fahrzustand ein Fahrzustand ist, der eine Menge der Druckluft verbraucht, und
das Steuergerät (80) basierend auf einer Abnahme des erfassten Luftdrucks pro Zeiteinheit bestimmt, dass der aktuelle Fahrzustand der Fahrzustand ist, der eine Menge der Druckluft verbraucht.

2. Luftversorgungssystem nach Anspruch 1, wobei
das Steuergerät (80) ferner eine Nicht-Versorgungs-Abbruchbedingung speichert, und
falls die Nicht-Versorgungs-Abbruchbedingung erfüllt ist, wenn die Nicht-Versorgungs-Fortsetzungsbedingung erfüllt ist, der Versorgungsbetrieb als Reaktion darauf gestartet wird, dass der erfasste Luftdruck kleiner oder gleich einem vorbestimmten Druckwert (CI3) ist, der kleiner als der Versorgungsstartwert ist.

3. Luftversorgungssystem nach Anspruch 2, wobei der vorbestimmte Druckwert so festgelegt ist, dass eine für den Regenerationsbetrieb erforderliche Menge an Zeit sichergestellt ist.

## Revendications

1. Système d'alimentation en air (10) qui effectue une opération d'alimentation qui amène de l'air comprimé alimenté par un compresseur (4) à circuler depuis un côté amont vers un côté aval via un sécheur d'air (11) comportant un filtre (17) et un clapet antiretour (19), le système d'alimentation en air comprenant :
un capteur de pression (65) qui détecte une pression d'air du côté aval du clapet antiretour (19) ; et
un dispositif de commande (80) qui commute entre l'opération d'alimentation et une opération de non-alimentation, et effectue une opération de régénération, qui régénère le filtre (17), pendant l'opération de non-alimentation, dans lequel
le dispositif de commande (80) stocke une valeur d'amorçage d'alimentation (CI1), l'opération d'alimentation étant amorcée lorsqu'une condition nécessaire est satisfaite, la condition nécessaire étant qu'une pression d'air détectée par le capteur de pression (65) est inférieure ou égale à la valeur d'amorçage d'alimentation,
**caractérisé en ce que**
le dispositif de commande (80) stocke en outre une condition de poursuite de non-alimentation, dans lequel, si la condition de poursuite de non-alimentation est satisfaite, l'opération d'alimentation n'est pas effectuée pendant l'opération de régénération, même si la pression d'air détectée est inférieure ou égale à la valeur d'amorçage d'alimentation, dans lequel
la condition de poursuite de non-alimentation comporte qu'un état de déplacement réel est un état de déplacement qui consomme une quantité de l'air comprimé, et
le dispositif de commande (80) détermine que l'état de déplacement réel est l'état de déplacement qui consomme une quantité de l'air comprimé sur la base d'une diminution de la pression d'air détectée par unité de temps.

2. Système d'alimentation en air selon la revendication 1, dans lequel
le dispositif de commande (80) stocke en outre une condition d'annulation de non-alimentation, et
si la condition d'annulation de non-alimentation est satisfaite lorsque la condition de poursuite de non-alimentation est satisfaite, l'opération d'alimentation est amorcée en réponse au fait que la pression d'air détectée est inférieure ou égale à une valeur de pression prédéterminée (CI3) qui est inférieure à la valeur d'amorçage d'alimentation.

3. Système d'alimentation en air selon la revendication 2, dans lequel la valeur de pression prédéterminée est établie de sorte qu'une durée de temps requise pour l'opération de régénération est garantie.
